(19) **Europäisches Patentamt**

**European Patent Office**

**Office européen des brevets**

(11) **EP 1 092 582 A2**

(12) **EUROPÄISCHE PATENTANMELDUNG**

(43) Veröffentlichungstag:
18.04.2001 Patentblatt 2001/16

(51) Int. Cl.⁷: **B60K 41/04**

(21) Anmeldenummer: **00115513.4**

(22) Anmeldetag: **19.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **12.10.1999 DE 19948992**

(71) Anmelder: **WABCO GmbH & Co. OHG**
**30453 Hannover (DE)**

(72) Erfinder:
• **Böckmann, Gerhard**
**30880 Laatzen (DE)**
• **Böhm, Andreas**
**30974 Wennigsen (DE)**

(74) Vertreter: **Schrödter, Manfred**
**WABCO GmbH & Co. OHG,**
**Am Lindener Hafen 21**
**30453 Hannover (DE)**

(54) **Verfahren zur Steuerung eines Getriebes**

(57) Die Erfindung betrifft ein Verfahren zur Steuerung eines Getriebes (26) in einem Kraftfahrzeug. Das Getriebe (26) wird mittels einer Getriebesteuereinrichtung (18), welche Betätigungswünsche des Fahrers auswertet, und einer elektropneumatischen Stelleinrichtung (28) gesteuert. Um möglichst schnelle Gangwechselvorgänge zu ermöglichen, wird während des Gangwechsels die Motordrehzahl durch Betätigung einer Motorbremseinrichtung (21) relativ schnell auf ein für den einzulegenden Gang geeignetes Niveau abgesenkt. Die Erfindung bewirkt eine frühzeitige Ausschaltung der Motorbremseinrichtung (21) unter Berücksichtigung einer spezifischen Ausschaltverzögerungsdauer, derart, daß zum Zeitpunkt der Synchronisation zwischen der wirklichen Getriebeeingangs-drehzahl und der aufgrund des Übersetzungsverhältnisses des einzulegenden Gangs berechneten Getriebeeingangs-drehzahl die Motorbremseinrichtung (21) abgeschaltet ist.

Fig. 1

**EP 1 092 582 A2**

**Beschreibung**

Die Erfindung betrifft ein Verfahren zur Steuerung eines Getriebes gemäß dem Oberbegriff des Patentanspruchs 1.

Ein derartiges Verfahren ist aus der EP 0 670 440 B1 bekannt.

Das bekannte Verfahren dient zur Steuerung eines manuell schaltbaren, unsynchronisierten Fahrzeuggetriebes herkömmlicher Bauart mit einer Vielzahl von Gängen, welches mittels einer elektronischen Steuereinrichtung für das Getriebe, die im folgenden auch als Getriebesteuereinrichtung bezeichnet wird, und einer damit in Verbindung stehenden elektropneumatischen Stelleinrichtung teilweise automatisiert betrieben wird. Die Automatisierung besteht darin, daß die mechanischen Bewegungen, die für einen Gangwechsel erforderlich sind, von der elektropneumatischen Stelleinrichtung infolge von Ansteuersignalen der Getriebesteuereinrichtung vorgenommen werden.

Bei einem durch die Getriebesteuereinrichtung gesteuerten, automatischen Gangwechsel ist es anstrebenswert, daß der Gangwechsel möglichst schnell erfolgt, um dem Fahrzeug wieder Antriebsleistung zur Verfügung zu stellen. Insbesondere bei einem Gangwechsel in Richtung einer größeren Getriebeübersetzung, d. h. also bei einem sogenannten Hochschalten, tritt das Problem auf, daß die anfänglich relativ hohe Motordrehzahl auf eine für den neuen Gang mit größerer Übersetzung geeignete geringere Drehzahl reduziert werden muß. Um diesen Vorgang zu beschleunigen, wird im eingangs erwähnten Stand der Technik bei einem Gangwechsel in Richtung eines größeren Übersetzungsverhältnisses eine Motorbremseinrichtung betätigt, die zu einer zügigeren Verringerung der Motordrehzahl beiträgt.

Motorbremseinrichtungen üblicher Bauart weisen eine gewisse Ansprechträgheit beim Ein- oder Ausschalten auf. Dies kann zu einer unerwünschten Betätigungsdauer der Motorbremseinrichtung und infolge dessen zu einer unerwünschten Verlängerung des Gangwechselvorgangs führen.

Der Erfindung liegt daher die Aufgabe zugrunde, ein Verfahren zur Steuerung eines Getriebes anzugeben, das einen zügigen Gangwechsel unter Verwendung einer Motorbremseinrichtung ermöglicht.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, einfach realisierbar zu sein und ohne zusätzliche Sensiermittel auszukommen.

Allein unter Verwendung der bei einer Getriebesteuereinrichtung gattungsgemäßer Art ohnehin vorhandener Sensiermittel kann die Erfindung durch einfache Erweiterung des Steuerprogramms in der Getriebesteuereinrichtung um einige Programmschritte realisiert werden.

Gemäß einer vorteilhaften Weiterbildung der Erfindung wird für die Bestimmung der Ausschaltschwelle für die Motorbremseinrichtung die Fahrzeugbeschleunigung bzw. die Fahrzeugverzögerung berücksichtigt. Das hat den Vorteil, daß die Erfindung in flexibler Weise bei unterschiedlichsten Fahrzeugtypen und Fahrbahnverläufen, insbesondere auch bei einer Fahrt im Gebirge, eingesetzt werden kann.

Gemäß einer weiteren vorteilhaften Weiterbildung wird die Ausschaltschwelle nach einem Ausschalten der Motorbremseinrichtung durch Messung der Ausschaltverzögerungsdauer automatisch bestimmt. Das hat den Vorteil, daß die Ausschaltschwelle bzw. die Ausschaltverzögerungsdauer nicht für jedes Fahrzeug einzeln durch Messungen bestimmt und dann in der Getriebesteuereinrichtung gespeichert werden muß. Ein weiterer Vorteil ist, daß hierdurch Einflüsse, die zu einer Veränderung des typischen Wertes der Ausschaltverzögerungsdauer führen können, wie z. B. Temperatureinflüsse, automatisch zu einer Anpassung der Ausschaltschwelle führen und somit die Dauer eines Schaltvorgangs weiter reduzieren.

Die Erfindung wird im folgenden unter Verwendung von Zeichnungen näher erläutert.

Es zeigen

Fig. 1       eine Einrichtung zur Ausführung des erfindungsgemäßen Verfahrens und

Fig. 2       den Ablauf eines Ausführungsbeispiels des erfindungsgemäßen Verfahrens als Zeitdiagramm und

Fig. 3 und 4       den Ablauf des Ausführungsbeispiels gemäß Fig. 2 in Flußdiagrammdarstellung.

In den Figuren werden gleiche Bezugszeichen für einander entsprechende Teile und Signale verwendet.

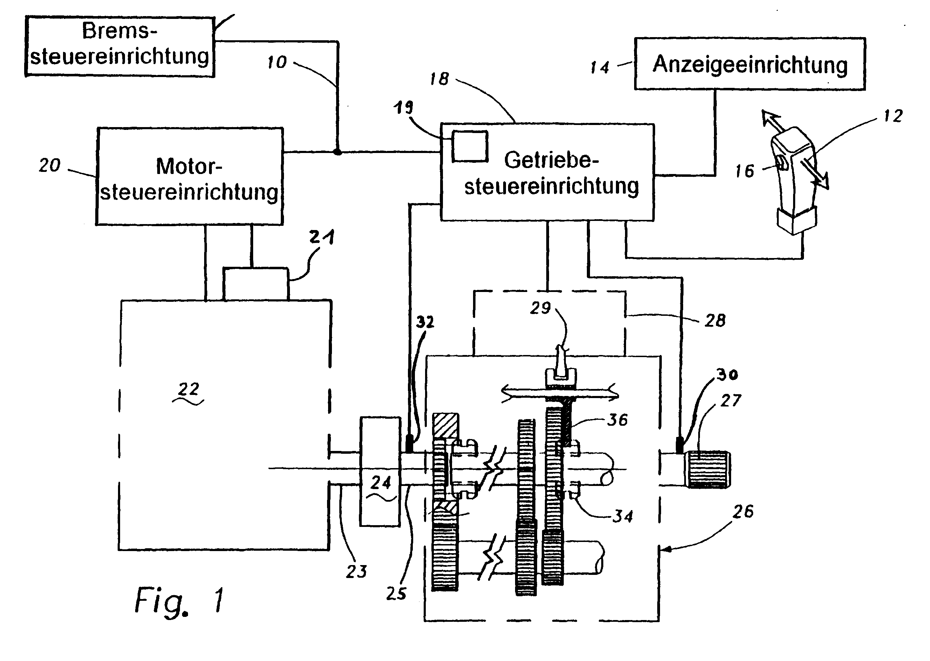

Die in der Fig. 1 dargestellte Einrichtung weist einen Motor (22) auf, der zum Antrieb eines Fahrzeuges dient, in dem die dargestellte Einrichtung eingesetzt wird. Der Motor (22) gibt seine Antriebsleistung in Form einer Drehbewegung über eine Motorabtriebswelle (23) an eine Kupplung (24) bekannter Bauart ab. Die Kupplung (24) kann mittels eines Pedals von dem Fahrer des Fahrzeuges in einen geöffneten und in einen geschlossenen Zustand bewegt werden. Ohne Betätigung des Pedals ist die Kupplung geschlossen, wogegen bei Betätigung des Pedals die Kupplung geöffnet wird. Im geschlossenen Zustand überträgt die Kupplung (24) die Drehbewegung der Motorabtriebswelle (23) auf eine Getriebeantriebswelle (25). Bei geöffneter Kupplung hingegen wird diese Drehbewegung nicht auf die Getriebeantriebswelle (25) übertragen.

Das Getriebe (26) dient zur Übertragung der Drehbewegung von der Getriebeantriebswelle (25) auf eine Getriebeabtriebswelle (27) mit einem veränderbaren Übersetzungsverhältnis. Die Getriebeabtriebswelle (27) ist über weitere Teile, wie z. B. eine weitere Welle, ein Kardangelenk, ein Differentialgetriebe usw. mit den Antriebsrädern des Fahrzeuges verbunden.

Das Getriebe (26) weist eine Vielzahl von Zahnrädern auf, welche zur Auswahl eines gewünschten Übersetzungsverhältnisses miteinander wechselweise in Eingriff gebracht werden können. Für die Einstellung des Übersetzungsverhältnisses bzw. der Kombination der Zahnräder sind mechanische Übertragungselemente (34, 36) vorgesehen, durch welche die Zahnräder verschoben werden können. Die mechanischen Übertragungselemente (34, 36) werden mittels eines Schaltfingers (29) von einem elektrisch betätigbaren Getriebeaktuator (28) bewegt. Der Getriebeaktuator (28) kann beispielsweise mit Elektromotoren ausgestattete Servoeinrichtungen aufweisen. In einer bevorzugten Ausgestaltung der Erfindung weist der Getriebeaktuator druckmittelbetätigbare Stellzylinder auf, welche über Elektromagnetventile mit wechselndem Druck aus einer Druckmittelquelle, z. B. einem Druckluftvorratsbehälter, beaufschlagbar sind.

Zur Steuerung der Getriebefunktionen ist der Getriebeaktuator (28) über elektrische Leitungen mit einer Getriebesteuereinrichtung (18) verbunden. Die Getriebesteuereinrichtung (18) ist außerdem mit Drehzahlsensoren (30, 32) verbunden, welche Informationen über die Getriebeeingangsdrehzahl, d.h. die Drehzahl der Getriebeantriebswelle (25), und über die Getriebeausgangsdrehzahl, d.h. die Drehzahl der Getriebeabtriebswelle (27), an die Getriebesteuereinrichtung (18) abgeben.

Des weiteren ist die Getriebesteuereinrichtung (18) mit einer Bedieneinheit (12, 16) verbunden, die einen Bedienhebel (12) und einen vorzugsweise an dem Bedienhebei (12) angeordneten Neutralschalter (16) aufweist. Mittels der Bedieneinheit (12, 16) kann der Fahrer des Fahrzeuges der Getriebesteuereinrichtung (18) mitteilen, welcher Gang eingelegt werden soll. In einer bevorzugten Ausgestaltung der Erfindung wird durch eine Vorwärtsbewegung des Bedienhebels (12) das Getriebe (26) um einen Gang hochgeschaltet, während durch eine Rückwärtsbewegung um einen Gang heruntergeschaltet wird. Durch Betätigung des Neutralschalters wird das Getriebe (26) in die Neutralstellung geschaltet, d. h. es wird kein Gang eingelegt.

Die Getriebesteuereinrichtung (18) ist über ein Datenbussystem (10) mit weiteren in dem Fahrzeug vorhandenen Steuereinrichtungen, z. B. einer Motorsteuereinrichtung (20) und einer Bremssteuereinrichtung (2), zum Datenaustausch verbunden. Über geeignete Daten-Botschaften kann die Getriebesteuereinrichtung (18) der Motorsteuereinrichtung (20) mitteilen, daß beispielsweise für einen Gangwechsel eine bestimmte Motordrehzahl eingestellt werden soll oder eine Motorbremseinrichtung (21) betätigt werden soll. Über andere Daten-Botschaften kann die Getriebesteuereinrichtung (18) beispielsweise von der Bremssteuereinrichtung (2) eine Information über bestimmte Fahrzeugdaten, wie z. B. die Fahrzeugmasse, erhalten.

Zum Ein- oder Ausschalten der Motorbremseinrichtung (21) sendet die Getriebesteuereinrichtung (18) der Motorsteuereinrichtung (20) mittels einer Daten-Botschaft einen Soll-Betätigungszustand ($B_{Soll}$) für die Motorbremseinrichtung (21). Von der Motorsteuereinrichtung (20) erhält die Getriebesteuereinrichtung (18) in einer weiteren Daten-Botschaft eine Rückmeldung über den Ist-Betätigungszustand ($B_{Ist}$) der Motorbremseinrichtung (21).

Die Getriebesteuereinrichtung (18) ist des weiteren mit einer vorzugsweise im Blickfeld des Fahrers angeordneten Anzeigeeinrichtung (14) verbunden, auf der bestimmte Informationen angezeigt werden können, z. B. den vom Fahrer mittels der Bedieneinheit (12, 16) ausgewählten Gang oder den einzulegenden oder bereits aktuell eingelegten Gang. In der Getriebesteuereinrichtung (18) ist außerdem ein nichtflüchtiger Speicher (19) angeordnet.

Der Motor ist außerdem mit der Motorsteuereinrichtung (20) verbunden, welche zur Steuerung der Motorfunktionen dient, z. B. Drehzahlsteuerung, Regelung der Kraftstoffzufuhr, Regelung von Schadstoffemissionen, Ein- und Ausschalten der Motorbremseinrichtung (21).

Die Getriebesteuereinrichtung (18), die Motorsteuereinrichtung (20) und die Bremssteuereinrichtung (2) sind vorzugsweise als elektronische Steuergeräte ausgebildet. Sie können auch als ein einziges Steuergerät ausgebildet sein.

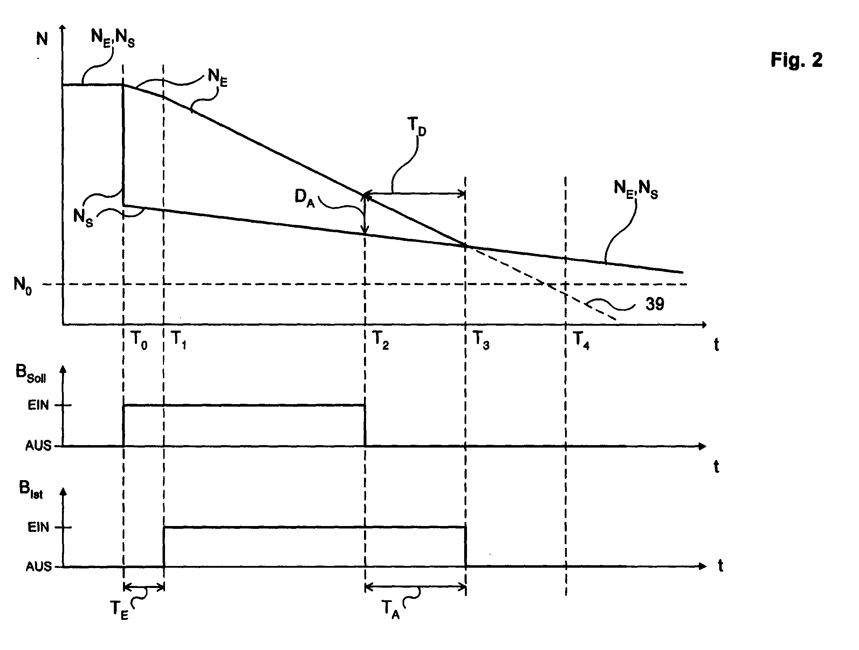

In der Fig. 2 ist der zeitliche Verlauf von Drehzahlen (N) und von Schaltsignalen der Motorbremseinrichtung (21) in jeweils eigenen Diagrammen dargestellt. Im Drehzahldiagramm (oben) ist die Drehzahl des Getriebeeingangs ($N_E$), die bei geschlossener Kupplung der Motordrehzahl entspricht, und die sogenannte Synchrondrehzahl ($N_S$) aufgetragen. Die Synchrondrehzahl berechnet sich als Produkt aus der Drehzahl des Getriebeausgangs ($N_A$) und der Getriebetibersetzung (G) des eingelegten bzw. gewünschten Gangs, wie aus folgender Beziehung hervorgeht:

$$N_S = N_A \cdot G \qquad [1]$$

Die Getriebeausgangsdrehzahl ($N_A$) kann bei Kenntnis der Übersetzungsverhältnisse des Antriebsdifferentials auch aus der Fahrzeuggeschwindigkeit bestimmt werden. Hierdurch kann bei vorhandener Information über die Fahrzeuggeschwindigkeit auf einen Drehzahlsensor an dem Getriebeausgang verzichtet werden.

In den unteren beiden Diagrammen der Fig. 2 ist einerseits der Soll-Betätigungszustand ($B_{Soll}$) und andererseits der Ist-Betätigungszustand ($B_{Ist}$) der Motorbremseinrichtung (21) als Signale mit den Zuständen EIN und AUS dargestellt. Anhand der Unterschiede zwischen den beiden Signalverläufen ($B_{Soll}$, $B_{Ist}$) sind die Einschaltverzögerungsdauer ($T_E$) und die Ausschaltverzögerungsdauer ($T_A$) erkennbar.

Die Synchrondrehzahl ($N_S$) entspricht bei geschlossener Kupplung und eingelegtem Gang immer der Motordrehzahl und der Getriebeeingangsdrehzahl ($N_E$). Sobald das Getriebe in Neutralstellung geschaltet wird, d. h. wenn kein Gang eingelegt ist, wird in der Getriebesteuereinrichtung (18) die Synchrondrehzahl aufgrund derjenigen Getriebeübersetzung (G) bestimmt, die sich infolge des von dem Fahrer gewünschten Gangs nach Einlegen dieses Gangs einstellen wird.

In der Fig. 2 ist mit durchgezogenen Linien der Ablauf eines Gangwechsels unter Anwendung der Erfindung und mit einer gestrichelten Linie (39) der theoretische Ablauf ohne Anwendung der Erfindung dargestellt. Die mit $N_0$ bezeichnete waagerechte gestrichelte Linie stellt die Leerlaufdrehzahl des Motors dar, die nicht unterschritten werden darf. Die senkrechten gestrichelten Linien dienen zur Markierung bestimmter Zeitpunkte in dem dargestellten Ablauf.

In dem Zeitraum vor dem Zeitpunkt ($T_0$) befindet sich das Fahrzeug in einem Fahrzustand mit gleichmäßiger Fahrgeschwindigkeit, wobei die Motordrehzahl relativ hoch ist. Die Kupplung (24) ist hierbei geschlossen, und ein Gang ist eingelegt. Zum Zeitpunkt ($T_0$) beginnt die Getriebesteuereinrichtung (18), eine ihr mittels der Bedieneinheit zugeführte Anforderung zum Gangwechsel in einen Gang mit größerem Übersetzungsverhältnis durchzuführen.

Ab dem Zeitpunkt ($T_0$) ist das Getriebe in der Neutralstellung. Von diesem Zeitpunkt an erfährt das Fahrzeug kein Antriebsmoment mehr, so daß sich die Fahrzeuggeschwindigkeit z. B. infolge einer ansteigenden Fahrbahn verringert. Analog zu der Fahrzeuggeschwindigkeit verringert sich die in der Getriebesteuereinrichtung (18) berechnete Synchrondrehzahl ($N_S$).

Da die Kupplung (24) geschlossen ist, verringert sich die Drehzahl des Getriebeeingangs ($N_E$) in gleicher Weise wie die Motordrehzahl mit einem motorspezifischen Drehzahlgradienten. Durch Betätigung der Motorbremseinrichtung (21) wird von einem ersten motorspezifischen Drehzahlgradienten auf einen zweiten, größeren motorspezifischen Drehzahlgradienten umgeschaltet und hierdurch eine Synchronisation zwischen den Drehzahlen ($N_E$, $N_S$) beschleunigt. Die Betätigung der Motorbremseinrichtung (21) erfolgt zum Zeitpunkt ($T_0$) durch Aussenden eines Einschaltsignals ($B_{Soll}$ = EIN). Die Wirkung der Motorbremseinrichtung (21) setzt ab dem Zeitpunkt ($T_1$) ein, d.h. zwischen dem Zeitpunkt ($T_0$) und dem Zeitpunkt ($T_1$) ist der erste Drehzahlgradient wirksam und ab dem Zeitpunkt ($T_1$) ist der zweite Drehzahlgradient wirksam.

Der von dem Fahrer gewünschte Gang kann erst eingelegt werden, wenn eine Synchronisation zwischen den Drehzahlen ($N_E$, $N_S$) erreicht wird.

Die Synchronisation erfolgt in der Darstellung gemäß Fig. 2 zu dem Zeitpunkt ($T_3$). Um den Gangwechsel möglichst frühzeitig, d. h. zu dem Zeitpunkt ($T_3$) beenden zu können, muß zu diesem Zeitpunkt die Motorbremseinrichtung (21) bereits wieder inaktiv sein, d. h. der Ist-Betätigungszustand ($B_{Ist}$) soll den Zustand AUS einnehmen. Hierfür berücksichtigt die Getriebsteuereinrichtung (18) eine spezifische Ausschaltverzögerungsdauer ($T_A$). Die Berücksichtigung kann einerseits dadurch vorgenommen werden, daß die Getriebesteuereinrichtung (18) den voraussichtlichen Zeitpunkt ($T_3$) der Synchronisation mittels linearer Extrapolation des zeitlichen Verlaufs der Drehzahlen ($N_E$, $N_S$) vorausberechnet und von diesem Zeitpunkt die Ausschaltverzögerungsdauer ($T_A$) abzieht. Der Zeitpunkt ($T_3$) der Synchronisation kann ab dem Zeitpunkt ($T_1$) fortlaufend zu jedem Zeitpunkt (t) vorzugsweise gemäß folgender Beziehung geschätzt werden:

$$T_3 = t + \frac{N_E(t) - N_S(t)}{\dot{N}_E(t) - \dot{N}_S(t)} \qquad [2]$$

Die Größe (t) stellt hierbei die Zeit dar, d.h. der Zeitpunkt ($T_3$) liegt ausgehend von der aktuellen Zeit (t) um den von den Größen ($N_E(t)$, $N_S(t)$, $\dot{N}_E(t)$, $\dot{N}_S(t)$) gebildeten Term in der Zukunft. Die Größen ($N_E(t)$, $N_S(t)$, $\dot{N}_E(t)$, $\dot{N}_S(t)$) sind dabei die Momentanwerte der bereits erläuterten Größen ($N_E$, $N_S$, $\dot{N}_E$, $\dot{N}_S$) zum Zeitpunkt (t).

Eine weitere vorteilhafte und im folgenden noch näher erläuterte Art der Bestimmung einer Ausschaltschwelle zur Ausschaltung der Motorbremseinrichtung ($B_{Soll}$ = AUS) besteht darin, die Drehzahlen ($N_E$, $N_S$) zu überwachen und bei Erreichen eines vorgegebenen Drehzahldifferenzwertes ($D_A$) ein Signal zum Ausschalten der Motorbremseinrichtung (21) abzugeben. Zusammengefaßt kann also gesagt werden, daß als Ausschaltschwelle für die Ausschaltung der Motorbremseinrichtung (21) entweder ein Zeitwert ($T_A$) oder ein Drehzahldifferenzwert ($D_A$) verwendet werden kann.

Im folgenden wird insbesondere die Verwendung eines Drehzahldifferenzwertes ($D_A$) als Ausschaltschwelle eingehender beschrieben. Gemäß einer vorteilhaften Ausgestaltung der Erfindung wird der Drehzahldifferenzwert ($D_A$) gemäß der Beziehung

$$D_A = D_0 \cdot \left(1 - \frac{\dot{N}_S}{\dot{N}_E}\right) \qquad [3]$$

bestimmt. Die Größe ($D_0$) stellt einen spezifischen Drehzahldifferenzwert für die jeweilige Motorbremseinrichtung dar, der bei sich nicht verändernder Synchrondrehzahl ($N_S$) aus der Ausschaltverzögerungsdauer ($T_A$) multipliziert mit dem zweiten motorspezifischen

Drehzahlgradienten ($\dot{N}_E$) bestimmt wird:

$$D_0 = T_A \cdot \dot{N}_E \qquad [4]$$

Die Getriebesteuereinrichtung (18) gibt daher zu dem Zeitpunkt ($T_2$), zu dem die Differenz zwischen den Drehzahlen ($N_E$, $N_S$) den Drehzahldifferenzwert ($D_A$) erreicht, ein Signal zum Ausschalten der Motorbremseinrichtung (21) aus. Zu dem Zeitpunkt ($T_3$) geht die Motorbremseinrichtung (21) dann in den inaktiven Zustand über ($B_{Ist}$ = AUS ).

Falls das Signal zum Ausschalten der Motorbremseinrichtung (21) nicht bereits zu dem Zeitpunkt ($T_2$) ausgegeben worden wäre, sondern beispielsweise erst zu dem Zeitpunkt ($T_3$), dann wäre die Motorbremseinrichtung (21) erst zu dem Zeitpunkt ($T_4$) in den inaktiven Zustand übergegangen. Wie aus der Fig. 2 anhand der gestrichelten Linien erkennbar ist, läge die Getriebeeingangsdrehzahl ($N_E$) bzw. die Motordrehzahl dann bereits deutlich unterhalb der Synchrondrehzahl ($N_S$) und im vorliegenden Beispiel sogar bereits unterhalb der Motorleerlaufdrehzahl ($N_0$). Hierdurch wäre einerseits der Gangwechselvorgang in unerwünschter Weise verlängert worden, andererseits wäre auch der Motor in einem unzulässigen Betriebszustand betrieben worden.

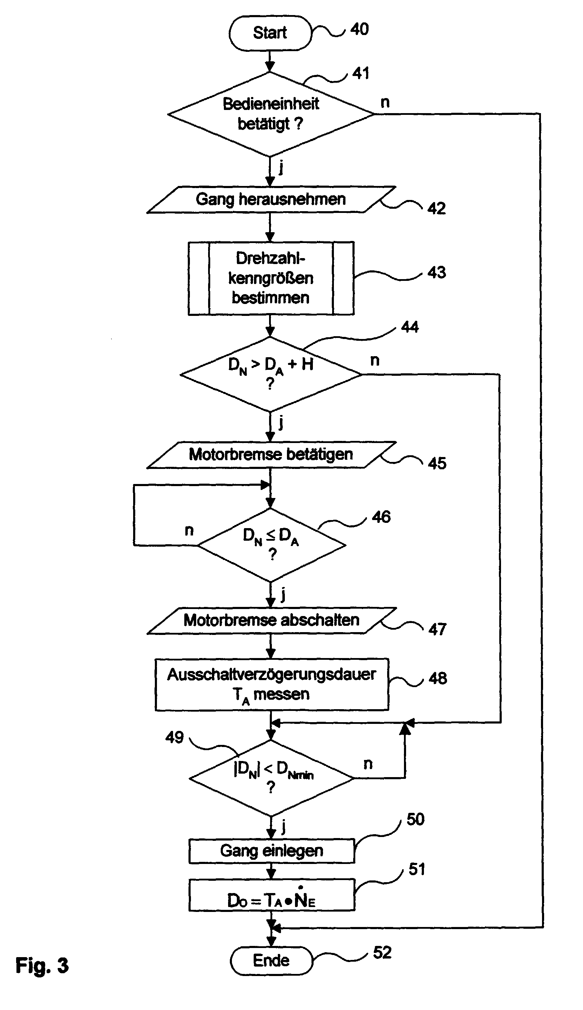

In der Fig. 3 ist der zuvor erläuterte Ablauf als Flußdiagramm dargestellt. Das Verfahren beginnt mit dem Block (40). In einem darauffolgenden Verzweigungsblock (41) wird geprüft, ob die Bedieneinheit (12, 16) zwecks eines Gangwechsels betätigt wurde. Wenn dies nicht der Fall ist, so endet das Verfahren mit dem Block (52).

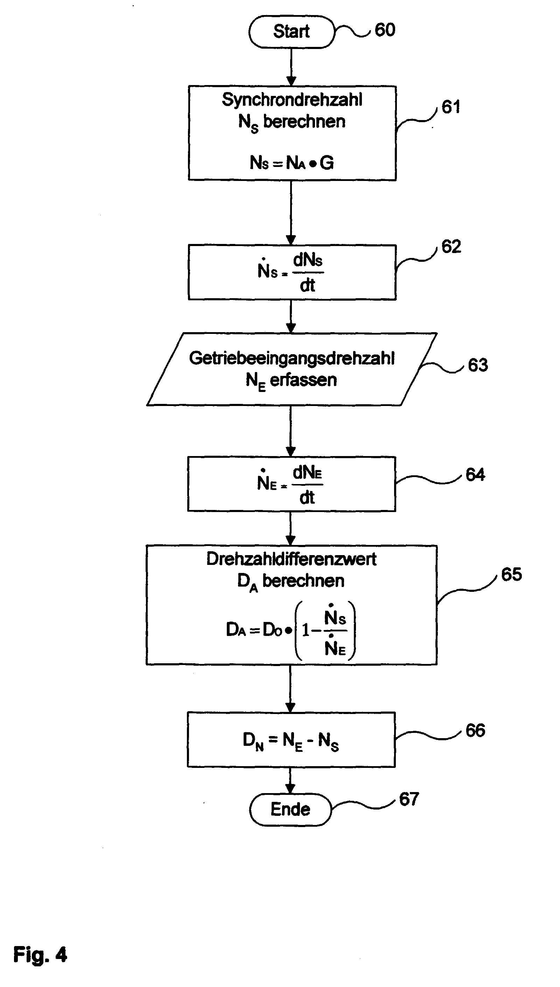

Anderenfalls wird mit einem Datentransferblock (42) fortgefahren, in dem ein Signal an den Getriebeaktuator (28) abgegeben wird, in dessen Folge der derzeit eingelegte Gang herausgenommen wird. Dies entspricht dem Zeitpunkt ($T_0$) gemäß Fig. 2. Daraufhin wird ein Unterprogrammblock (43) aufgerufen, in dem Drehzahlkenngrößen bestimmt werden. Der Unterprogrammblock (43) ist in der Fig. 4 näher dargestellt.

Der Unterprogrammblock (43) beginnt mit dem Block (60). Sodann wird mit einem Zuweisungsblock (61) fortgefahren, in welchem die Synchrondrehzahl ($N_S$) gemäß Gleichung [1] berechnet wird. Sodann wird in einem Zuweisungsblock (62) die zeitliche Ableitung ($\dot{N}_S$) der Synchrondrehzahl ($N_S$) berechnet. Die zeitliche Ableitung ($\dot{N}_S$) entspricht der Steigung der in Fig. 2 mit ($N_S$) bezeichneten Gerade ab dem Zeitpunkt ($T_0$).

Daraufhin wird in einem Datentransferblock (63) die Getriebeeingangsdrehzahl ($N_E$) erfaßt, z. B. durch Auswertung des Signals von dem Drehzahlsensor (32) oder durch empfangen einer Drehzahlinformation von der Motorsteuereinrichtung (20) über das Datenbussystem (10). In einem Zuweisungsblock (64) wird dann die zeitliche Ableitung ($\dot{N}_E$) der Getriebeeingangsdrehzahl ($N_E$) berechnet. Die Ableitung ($\dot{N}_E$) entspricht den Steigungen der in der Fig. 2 mit ($N_E$) bezeichneten Geradenstücken ab dem Zeitpunkt ($T_0$) bzw. den zuvor bereits erwähnten ersten und zweiten Drehzahlgradienten des Motors. Alternativ kann statt der Bestimmung der zeitlichen Ableitung auch ein in der Getriebesteuereinrichtung (18), z. B. in dem Speicher (19), gespeicherter vorgegebener Wert verwendet werden, welcher ein Maß für den typischen zweiten Drehzahlgradienten, welcher sich bei eingeschalteter Motorbremseinrichtung (21) einstellt, darstellt.

Unter Anwendung der Gleichung [3] wird dann in einem Zuweisungsblock (65) der Drehzahldifferenzwert ($D_A$) berechnet, welcher im folgenden als Kriterium für das Einschalten und Ausschalten der Motorbremseinrichtung (21) herangezogen wird. Des weiteren wird in einem Zuweisungsblock (66) die aktuelle Differenz ($D_N$) zwischen den Drehzahlen ($N_E$, $N_S$) berechnet. Der Unterprogrammblock (43) endet daraufhin mit dem Block (67).

Der Programmablauf wird sodann mit dem in der Fig. 3 dargestellten Verzweigungsblock (44) fortgesetzt. Dort wird überprüft, ob die aktuelle Differenz ($D_N$) zwischen den Drehzahlen ($N_E$, $N_S$) den um einen Hysteresewert (H) erhöhten Drehzahldifferenzwert ($D_A$) überschreitet. Der Hysteresewert dient zur Vermeidung eines unnötigen Einschaltens der Motorbremseinrichtung (21) und eines Hin- und Herschaltens zwischen den Zuständen EIN und AUS, wenn die aktuelle Differenz ($D_N$) in der Nähe des Drehzahldifferenzwertes ($D_A$) liegt. In diesem Fall, d. h. wenn der um den Hysteresewert (H) erhöhte Drehzahldifferenzwert ($D_A$) nicht überschritten wird, ist eine Betätigung der Motorbremseinrichtung (21) nicht sinnvoll, so daß unter Umgehung der Blöcke (45, 46, 47, 48) direkt zu dem Verzweigungsblock (49) verzweigt wird.

Anderenfalls wird zu einem Datentransferblock (45) verzweigt, wo eine Daten-Botschaft an die Motorsteuereinrichtung (20) gesandt wird, mittels der die Motorbremseinrichtung (21) betätigt wird ($B_{Soll}$ = EIN ). Die Wirkung der Motorbremseinrichtung (21) setzt dann, wie bereits erwähnt, zu dem Zeitpunkt ($T_1$) ein ($B_{Ist}$ = EIN ).

Der Hysteresewert (H) ist durch Versuche auf den jeweiligen Einsatzfall abzustimmen. Er sollte in jedem Fall derart gewählt werden, daß eine Betätigung der Motorbremseinrichtung (21) unterbleibt, wenn in Anbetracht der Summe der Einschaltverzögerungsdauer ($T_E$) und der Ausschaltverzögerungsdauer ($T_A$) zu erwarten ist, daß eine Betätigung der Motorbremseinrichtung (21) aufgrund einer bereits relativ geringen Drehzahldifferenz zwischen den Drehzahlen ($N_E$, $N_S$) nicht zu einer schnelleren Synchronisation zwischen diesen Drehzahlen führt.

In einem darauf folgenden Verzweigungsblock (46) wird fortlaufend geprüft, ob die aktuelle Differenz ($D_N$) zwischen den Drehzahlen ($N_E$, $N_S$) den Drehzahldifferenzwert ($D_A$) erreicht oder unterschreitet. Sobald eine Erreichung oder Unterschreitung erkannt wird, wird mit dem Datentransferblock (47) fortgefahren, in welchem eine Daten-Botschaft an die Motorsteuereinrichtung (20) zur Ausschaltung der Motorbremseinrichtung (21) ausgesandt wird ($B_{Soll}$ = AUS).

In einem weiteren Programmblock (48) wird die Ausschaltverzögerungsdauer ($T_A$) durch Auswertung der Zeitpunkte gemessen, zu denen der Soll-Betätigungszustand ($B_{soll}$) der Motorbremseinrichtung (21) von dem Zustand EIN in den Zustand AUS wechselt (Zeitpunkt $T_2$) und der Ist-Betätigungszustand ($B_{Ist}$) von dem Zustand EIN in den Zustand AUS wechselt (Zeitpunkt $T_3$). Hierfür speichert die Getriebesteuereinrichtung (18) die Zeitpunkte ($T_2$, $T_3$) und bestimmt die Ausschaltverzögerungsdauer ($T_A$) als Differenz der Zeitpunkte ($T_2$, $T_3$), z.B. in einem Interruptprogramm.

Sodann wird in einem Verzweigungsblock (49) fortlaufend geprüft, ob eine Synchronisation der Drehzahlen ($N_E$, $N_S$) erfolgt ist. Die Synchronisation wird als erfolgt angesehen, wenn die aktuelle Differenz ($D_N$) zwischen den Drehzahlen ($N_E$, $N_S$) vom Betrage her einen Mindest-Differenzwert ($D_{Nmin}$) unterschreitet. Der Mindest-Differenzwert ($D_{Nmin}$) wird vorzugsweise auf 10 bis 40 Umdrehungen pro Minute festgelegt. Wenn die Synchronisation erfolgt ist, dann wird in einem Block (50) der ausgewählte Gang durch Ausgabe geeigneter Signale an den Getriebeaktuator (29) eingelegt.

Schließlich wird in einem Zuweisungsblock (51) die Größe ($D_0$) gemäß Gleichung [4] bestimmt, wie zuvor schon näher erläutert wurde. Bei Inbetriebnahme der Getriebesteuereinrichtung (18) vor erstmaliger Benutzung der Motorbremseinrichtung (21), z.B. nach dem Einschalten der Zündung, werden für die dann noch nicht exakt bestimmbaren die Größen ($D_0$, $T_A$, $\dot{N}_E$) geeignete fahrzeugtypische Ersatzwerte verwendet, welche vorzugsweise in dem Speicher (19) gespeichert sind.

Daraufhin endet das Verfahren mit dem Block (52).

## Patentansprüche

1. Verfahren zur Steuerung eines Getriebes (26) mit mehreren Gängen für ein motorbetriebenes Fahrzeug, wobei eine von dem Fahrer zur Anforderung eines gewünschten Gangs betätigbare Bedieneinheit (12, 16) mit einer Steuereinrichtung (18) für das Getriebe (26) verbunden ist und die Steuereinrichtung (18) infolge einer Betätigung der Bedieneinheit (12, 16) automatisch einen Gangwechsel durchführt, und wobei in dem Fahrzeug Mittel (30, 32) zur Erfassung der Drehzahl ($N_E$) des Getriebeeingangs und der Drehzahl ($N_A$) des Getriebeausgangs vorgesehen sind, und wobei eine mittels eines Betätigungssignals ($B_{Soll}$) von der Steuereinrichtung (18) betätigbare Motorbremseinrichtung (21) vorgesehen ist, welche bei einem Gangwechsel zwecks Reduzierung der Getriebeeingangsdrehzahl ($N_E$) betätigt wird, **dadurch gekennzeichnet,** daß die Betätigung der Motorbremseinrichtung (21) bereits bei Erreichen einer Ausschaltschwelle ($D_A$, $T_2$) vor einer erwarteten Synchronisation der Drehzahlen ($N_E$, $N_S$) beendet wird.

2. Verfahren nach Anspruch 1, **dadurch gekennzeichnet,** daß die Ausschaltschwelle ($D_A$, $T_2$) ein vorbestimmter Drehzahldifferenzwert ($D_A$) zwischen den Drehzahlen ($N_E$, $N_S$) ist.

3. Verfahren nach einem der vorhergehenden Ansprüche, **dadurch gekennzeichnet,** daß die Ausschaltschwelle ($D_A$, $T_A$) ein vorbestimmter Ausschaltzeitpunkt ($T_2$) vor der erwarteten Synchronisation der Drehzahlen ($N_E$, $N_S$) ist.

4. Verfahren nach Anspruch 3, **dadurch gekennzeichnet,** daß der Ausschaltzeitpunkt ($T_2$) um eine für die Motorbremseinrichtung (21) typische Ausschaltverzögerungsdauer ($T_A$) vor der erwarteten Synchronisation der Drehzahlen ($N_E$, $N_S$) liegt.

5. Verfahren nach Anspruch 2, **dadurch gekennzeichnet,** daß die Bestimmung des Drehzahldifferenzwertes ($D_A$) gemäß der Beziehung

$$D_A = D_0 \cdot \left(1 - \frac{\dot{N}_S}{\dot{N}_E}\right)$$

erfolgt, wobei die Größe ($D_0$) ein fahrzeugspezifischer Anteil des Drehzahldifferenzwertes ($D_A$), die Größe ($\dot{N}_E$) die zeitliche Ableitung der Getriebeeingangsdrehzahl ($N_E$) und die Größe ($\dot{N}_S$) die zeitliche Ableitung der Synchrondrehzahl ($N_S$), welche als Produkt der Getriebeausgangsdrehzahl ($N_A$) mit dem Übersetzungsverhältnis (G) des einzulegenden Gangs bestimmt wird, ist.

6. Verfahren nach Anspruch 5, **dadurch gekennzeichnet,** daß der fahrzeugspezifische Anteil ($D_0$) des Drehzahldifferenzwertes ($D_A$) als Produkt aus einer für die Motorbremseinrichtung (21) typischen Ausschaltverzögerungsdauer ($T_A$) und einem für den Motor bei eingeschalteter Motorbremseinrichtung (21) typischen Zeitgradienten ($\dot{N}_E$) der Drehzahl ($N_E$) bestimmt wird.

7. Verfahren nach einem der vorhergehenden Ansprüche, **dadurch gekennzeichnet,** daß die Bestimmung der Ausschaltschwelle ($D_A$, $T_A$) unter Berücksichtigung der Fahrzeugbeschleunigung bzw. einer die Fahrzeugbeschleunigung repräsentierenden Größe ($\dot{N}_A$) erfolgt.

**EP 1 092 582 A2**

**8.** Verfahren nach einem der vorhergehenden Ansprüche, <u>dadurch gekennzeichnet,</u> daß die Ausschaltschwelle ($D_A$, $T_A$) nach einem Ausschalten der Motorbremseinrichtung (21) durch Messung der Ausschaltverzögerungsdauer ($T_A$) automatisch bestimmt wird.

**9.** Verfahren nach einem der vorhergehenden Ansprüche, <u>dadurch gekennzeichnet,</u> daß die Bestimmung des Zeitpunkts ($T_3$) erwarteten Synchronisation der Drehzahlen ($N_E$, $N_S$) mittels linearer Extrapolation des zeitlichen Verlaufs der Drehzahlen ($N_E$, $N_S$) erfolgt.

Fig. 1

EP 1 092 582 A2

Fig. 2

Fig. 3

**Fig. 4**